# EUROPEAN PATENT APPLICATION

(11) **EP 4 513 732 A1**
(43) Date of publication of application: **26.02.2025**
(21) Application number: 24166685.8
(22) Date of filing: 27.03.2024
(51) Int. Cl.: H02M 1/15

(54) **POWER CONVERSION SYSTEM AND CONTROL METHOD THEREOF**

(30) Priority: 23.08.2023 CN 202311063966
(71) Applicant: Delta Electronics (Shanghai) Co., Ltd., Shanghai 201209 (CN)
(72) Inventor: XIA, Litao, Shanghai 201209 (CN); BAI, Xinmin, Shanghai 201209 (CN); ZHANG, Jinfa, Shanghai 201209 (CN); WEN, Bo, Shanghai 201209 (CN); SHEN, Zhiyu, Shanghai 201209 (CN); MANTOVANELLI BARBOSA, Peter, Shanghai 201209 (CN)
(74) Representative: SSM Sandmair

(57) **Abstract**

The disclosure discloses a power conversion system(10) and a control method, and the control method includes: providing a power conversion module (13) which includes a damping circuit (13a) and a first capacitor (13b) connected in series, and a controller, wherein the damping circuit (13a) includes a first inductor (L_{d}), a first switch (S_{du}), a second switch (S_{db}), and a second capacitor (C_{d_dc}), and the first switch (S_{du}) and the second switch (S_{db}) are connected in series to form a first bridge arm; the first inductor (L_{d}) is connected between an intermediate node of the first bridge arm and the first capacitor (13b), and the second capacitor (C_{d_dc}) is connected in parallel to the first bridge arm; obtaining a first current reference value (ii) according to an input voltage (V_{PN}) of the power conversion module (13), a voltage (VC_{d_dc}) of the second capacitor (C_{d_dc}), and a voltage reference value (V_{Cd_dc_ref})of the second capacitor (C_{d_dc}); obtaining a second current reference value (i₂) according to the input voltage (V_{PN}) of the power conversion module(13) and a current signal related to an input current of the power conversion module (13); and outputting a driving signal (d_{d}) according to an inductor current (i_{Ld}) flowing through the first inductor (L_{d})and an inductor current reference value (i_{Ld_Ref}) of the first inductor (L_{d}) to control the first switch (S_{du}) and the second switch (S_{db}), wherein the current reference value (i_{Ld_Ref}) of the first inductor (Ld)is obtained according to the first current reference value (ii)and the second current reference value(i₂).

## Description

### BACKGROUND OF THE INVENTION

### 1. Field of the Invention

The present disclosure relates to the technical field of power electronics, in particular to a power conversion system and a control method thereof.

### 2. Related Art

At present, the patent document with the patent application No. 202311063966.5 proposes a non-isolated DC/DC power converter. Referring to Fig. 1, the non-isolated DC/DC power converter 20 includes a power module 21 and an oscillation suppression module 22, and the power module 21 includes a first power conversion circuit 211. The first power conversion circuit 211 is a non-isolated DC/DC conversion circuit, and the first output terminal A of the first power conversion circuit 211 is connected to the first inductor Lf1, the second output terminal B of the first power conversion circuit 211 is connected to the second inductor Lf2. The oscillation suppression module 22 has a first input terminal P and a second input terminal N, with an input voltage Vin between the first input terminal P and the second input terminal N. It internally includes a second power conversion circuit 221, and the first port of the second power conversion circuit 221 is connected in parallel to the input port of the first power conversion circuit 211. The current at the first port of the second power conversion circuit 221 is in phase with at least part of AC voltage components of the input voltage Vin of the oscillation suppression module 22.

The input port of the non-isolated DC/DC power converter 20 can be connected to the output port of any rectification circuit, that is, the DC bus. The rectification circuit is connected to an AC power source to form a power conversion system. As shown in Fig. 2, the first power conversion circuit 211 can be considered as a constant power load (CPL) represented by an equivalent input impedance Z_{L}(S), exhibiting negative resistance characteristics at its equivalent input impedance Z_{L}(S). As shown in Fig. 3, a damper is added to the source side formed by the AC power source and rectification circuit. For example, any second power conversion circuit in the above embodiment. The equivalent impedance on the source side of is Z_{S}(S). Based on impedance analysis (equivalent circuit model as shown in Fig. 4) and the frequency domain control model in Fig. 5, according to the Nyquist stability criterion, if the equivalent impedance on the source side does not have sufficient damping, instability and oscillation as shown in Fig. 6 will occur on the DC bus or AC power source.

How to provide a power conversion system and a control method with high work efficiency and strong stability is an urgent problem that needs to be solved in the industry.

### SUMMARY OF THE INVENTION

The purpose of the present disclosure is to provide a power conversion system and a control method thereof, which can solve one or multiple defects of the prior art.

To achieve the above purpose, the present disclosure provides a power conversion system, including a power conversion module, wherein the power conversion module includes a damping circuit and a first capacitor connected in series, and a controller, wherein the damping circuit includes a first inductor, a first switch, a second switch, and a second capacitor, and the first switch and the second switch are connected in series to form a first bridge arm; the first inductor is connected between an intermediate node of the first bridge arm and the first capacitor, and the second capacitor is connected in parallel to the first bridge arm, characterized in that, the controller includes: a capacitor voltage control unit, obtaining a first current reference value according to an input voltage of the power conversion module, a voltage of the second capacitor, and a voltage reference value of the second capacitor; a damping current generation unit, obtaining a second current reference value according to the input voltage of the power conversion module and a current signal related to an input current of the power conversion module; and an inductor current control unit, outputting a driving signal according to a current flowing through the first inductor and a current reference value of the first inductor to control the first switch and the second switch, in order to stabilize the input voltage of the power conversion module, wherein the current reference value of the first inductor is obtained according to the first current reference value and the second current reference value.

To achieve the above purpose, the present disclosure provides a control method of a power conversion system, including: providing a power conversion module which includes a damping circuit and a first capacitor connected in series, and a controller, wherein the damping circuit includes a first inductor, a first switch, a second switch, and a second capacitor, and the first switch and the second switch are connected in series to form a first bridge arm; the first inductor is connected between an intermediate node of the first bridge arm and the first capacitor, and the second capacitor is connected in parallel to the first bridge arm; obtaining a first current reference value according to an input voltage of the power conversion module, a voltage of the second capacitor, and a voltage reference value of the second capacitor; obtaining a second current reference value according to the input voltage of the power conversion module and a current signal related to an input current of the power conversion module; and outputting a driving signal according to an inductor current flowing through the first inductor and an inductor current reference value of the first inductor to control the first switch and the second switch, in order to stabilize the input voltage of the power conversion module, wherein the current reference value of the first inductor is obtained according to the first current reference value and the second current reference value.

The power conversion system and control method thereof provided by the present disclosure can promote the work efficiency and system stability of the power conversion system and reduce the system loss.

### BRIEF DESCRIPTION OF THE DRAWINGS

In order to more clearly illustrate the technical solution in the embodiment of the present disclosure, a brief introduction of the accompanying drawings that are required in the embodiments is given below.

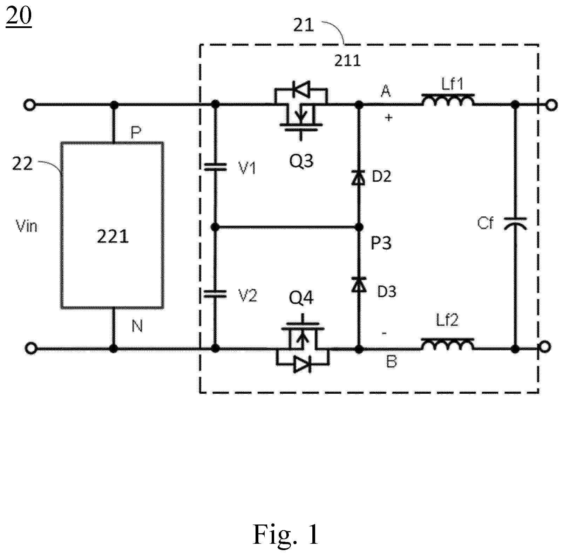

Fig. 1 is the circuit topology of a non-isolated DC/DC power converter of the prior art;

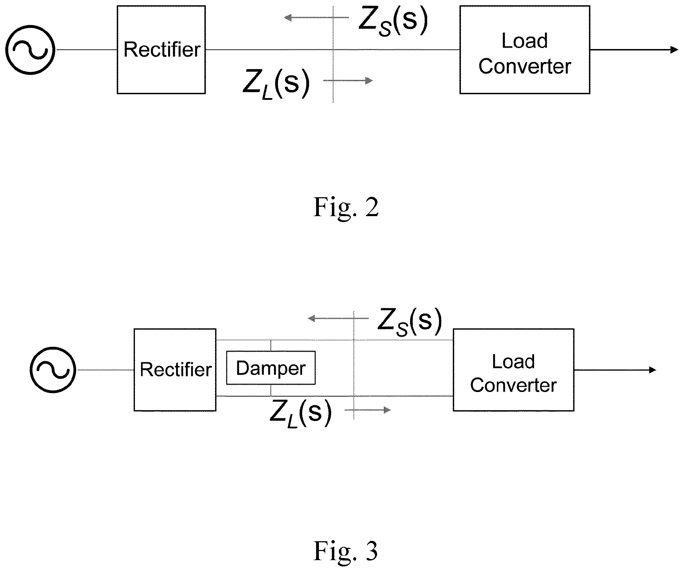

Fig. 2 is an equivalent schematic diagram of a power conversion system including a first power conversion circuit;
Fig. 3 is an equivalent schematic diagram of a power conversion system including the non-isolated DC/DC power converter as shown in Fig. 1;

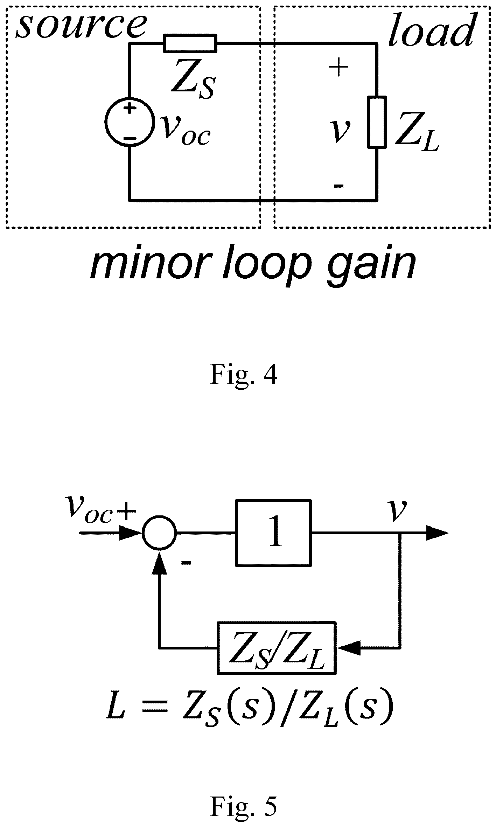

Fig. 4 is an equivalent circuit model of the power conversion system based on Fig. 3;
Fig. 5 is a frequency domain control model based on Fig. 4;

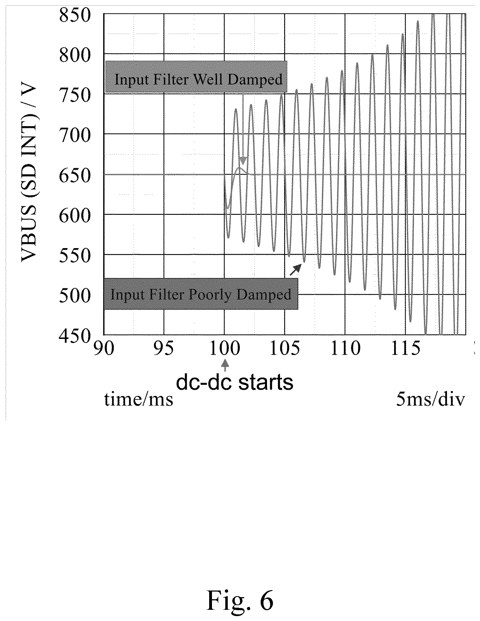

Fig. 6 is a simulation waveform diagram of the voltage on the DC bus based on Fig. 5;

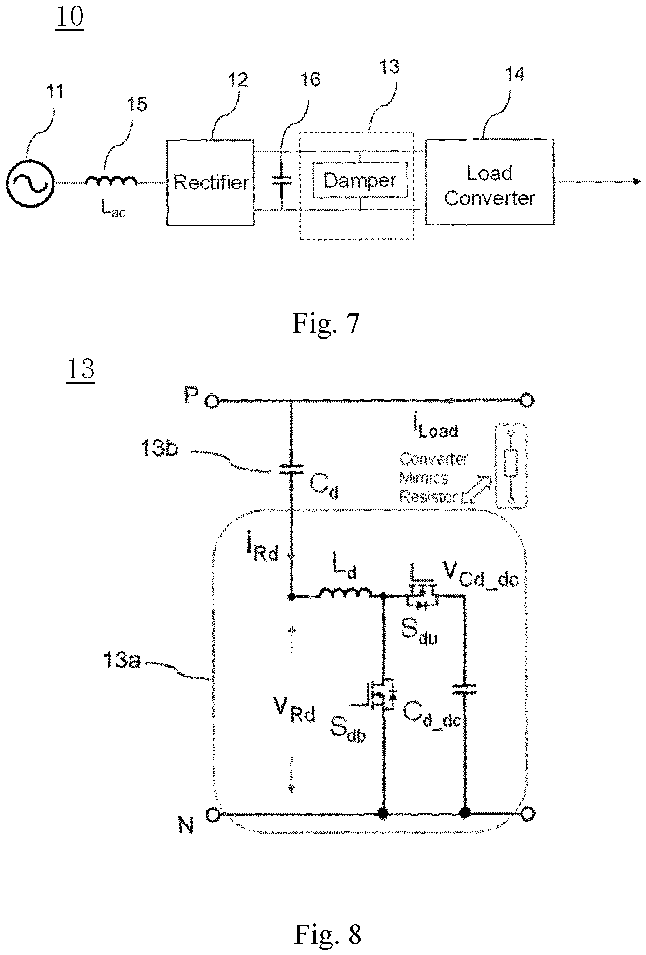

Fig. 7 is a schematic diagram of the structure of the power conversion system disclosed herein;
Fig. 8 is the circuit topology of the power conversion module disclosed herein;

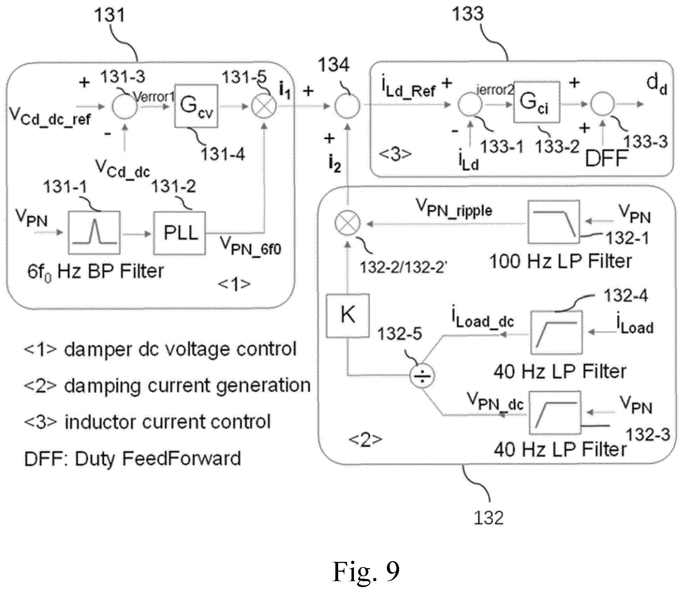

Fig. 9 is a schematic diagram of the control process of the controller disclosed herein;

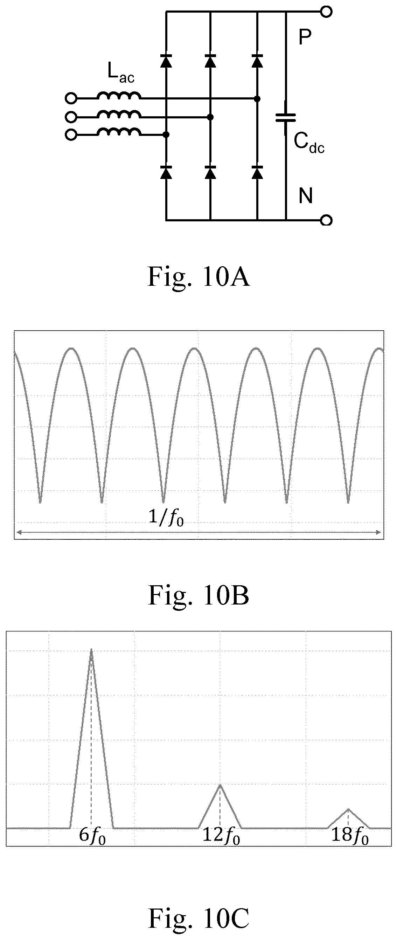

Fig. 10A is a schematic diagram of the three-phase rectification circuit;
Fig. 10B is a schematic diagram of the output waveform of the three-phase rectification circuit as shown in Fig. 10A;
Fig. 10C is a schematic diagram of the main AC harmonic components of the output voltage of the three-phase rectification circuit;

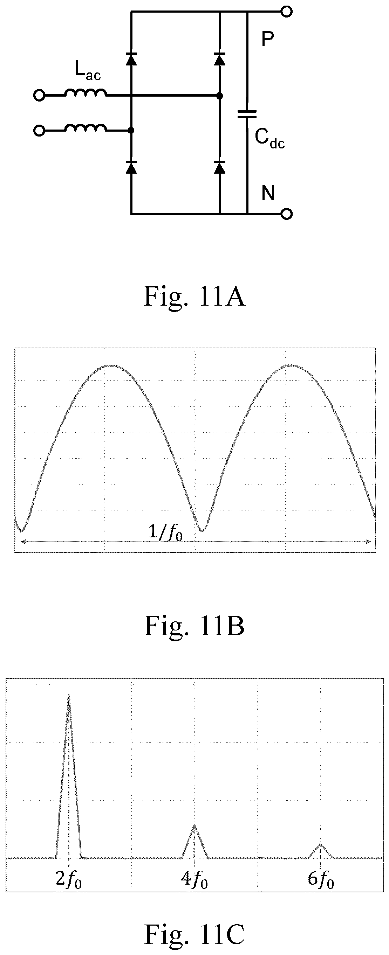

Fig. 11A is a schematic diagram of the single-phase diode rectification circuit;
Fig. 11B is a schematic diagram of the output waveform of the single-phase diode rectification circuit as shown in Fig. 11A;
Fig. 11C is a schematic diagram of the main AC harmonic components of the output voltage of the single-phase rectification circuit;

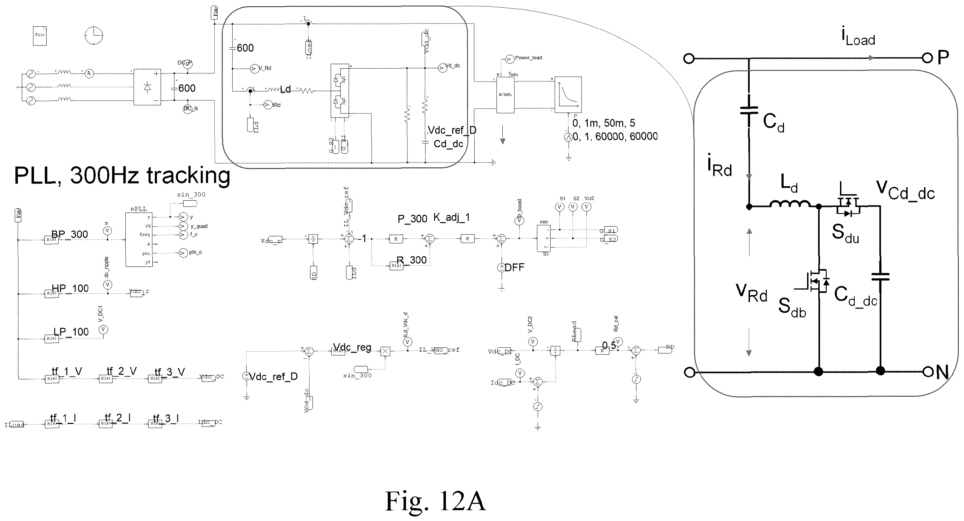

Fig. 12A is a simulation model of the computer simulation of the control embodiment disclosed herein;

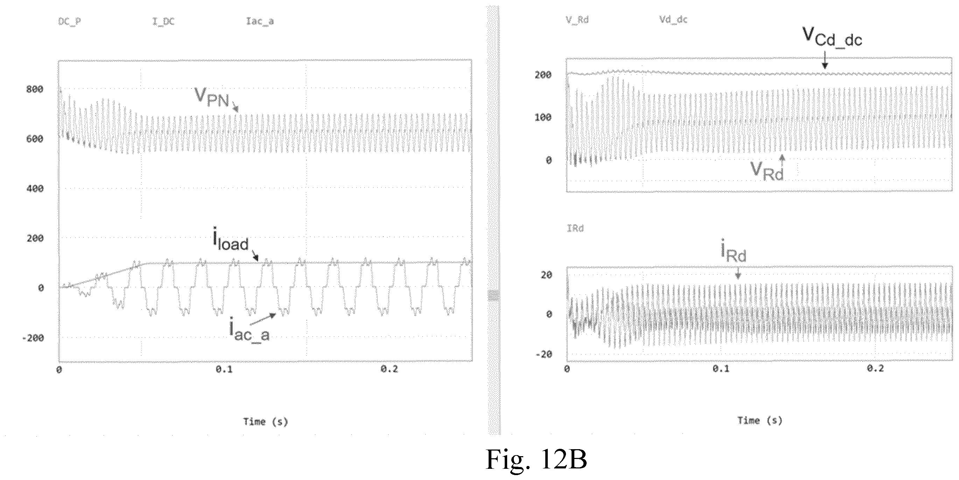

Fig. 12B shows the simulation results based on the simulation model as shown in Fig. 12A;

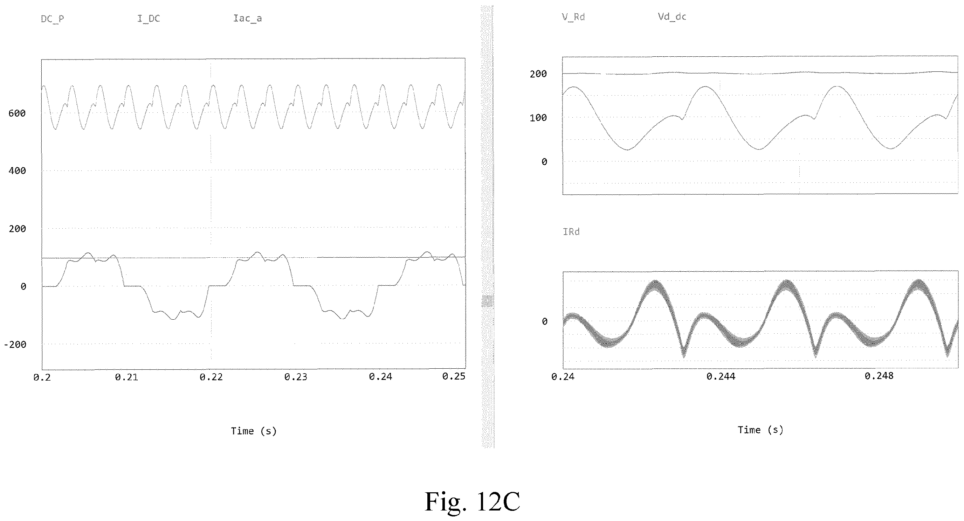

Fig. 12C is an enlarged view of the simulation results as shown in Fig. 12B;

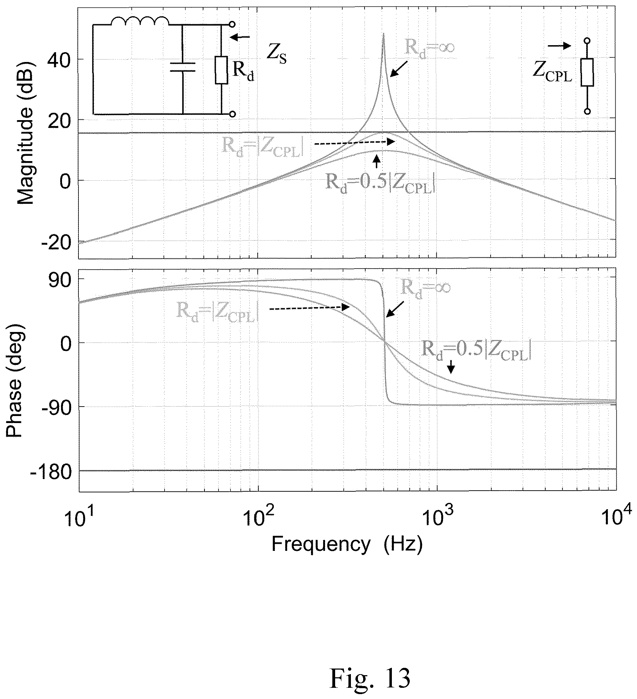

Fig. 13 shows the simulation results of damping current generation in a damping current generator based on different first coefficients;

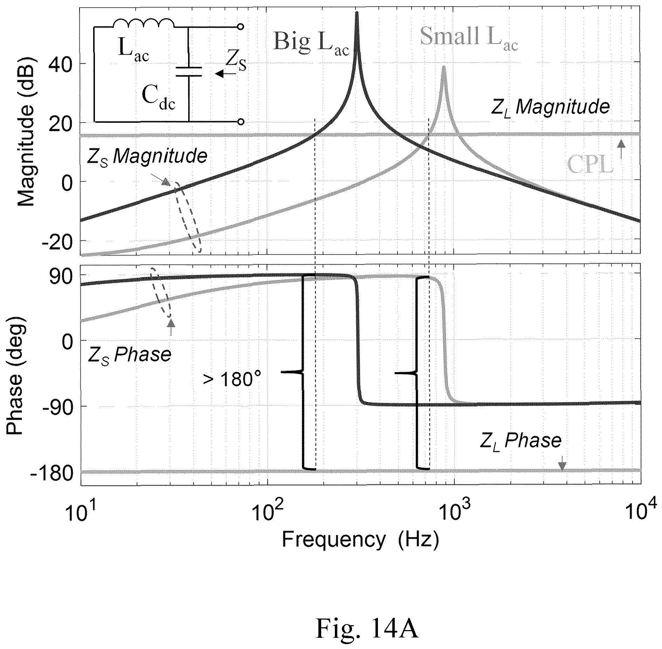

Figs. 14A-14B are simulation diagrams for optimizing the damping current;

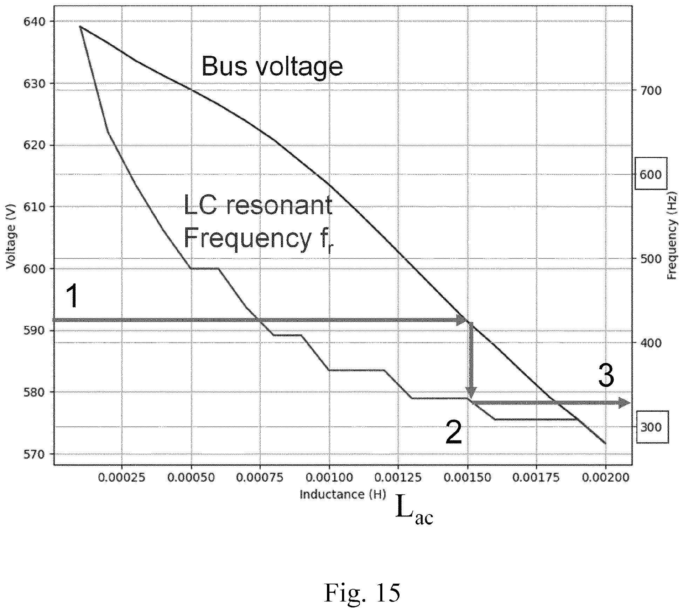

Fig. 15 shows the relationship between the DC bus voltage and the resonant frequency of the rectifier output impedance;

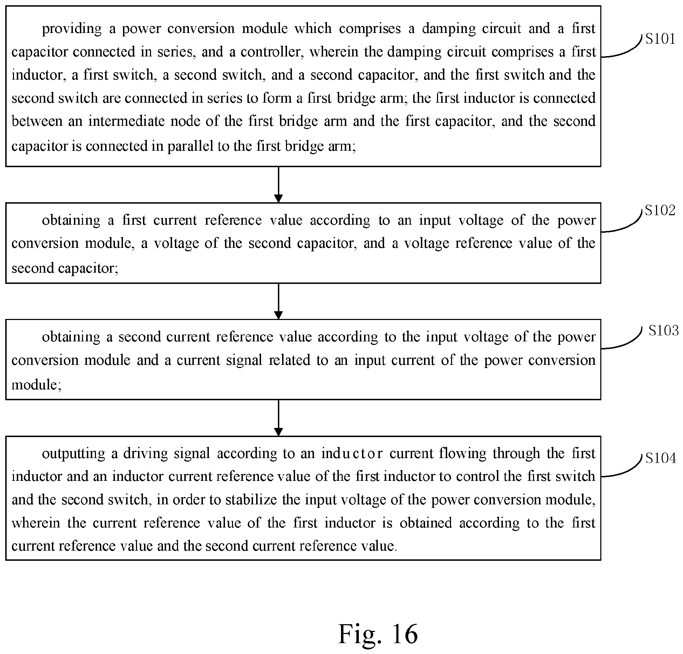

Fig. 16 is a flowchart of the power conversion method disclosed herein.

Additional aspects and advantages of the present disclosure will be set forth in part in the following description, and will become apparent in part from the description, or may be learned through the practice of the present disclosure.

### DETAILEDEMBODIMENTS OF THE INVENTION

Exemplary embodiments will now be described more fully with reference to the accompanying drawing. However, the exemplary embodiments may be implemented in many forms and should not be construed as limited to the embodiments set forth herein; on the contrary, these exemplary embodiments are provided so that the present disclosure will be comprehensive and complete, and will the conception of exemplary embodiments will be fully conveyed to those skilled in the art.

When introducing the elements/components/etc. described and/or illustrated herein, the terms "one", "a", "this", "the" and "at least one" are used to indicate the existence of one or more elements/components/etc. The terms "include", "comprise" and "provided with" are used to mean open inclusion and mean that there may be other elements/components/etc. in addition to the listed elements/components/etc. In addition, the terms "first", "second" and the like in the claims are only used as marks, and are not numerical restrictions on their objects. In the figures, like reference numerals refer to the same or similar components. On the other hand, well-known components and steps are not described in the embodiments to avoid unnecessary limitations on the present disclosure. In addition, for the sake of simplifying the accompanying drawings, some commonly known structures and elements will be illustrated in a simple schematic manner in the drawings.

Fig. 7 is a schematic diagram of the structure of the power conversion system 10 disclosed herein. As shown in Fig. 7, the power conversion system 10 includes an AC power source 11, a rectification circuit 12, and a power conversion module 13 connected sequentially.

Fig. 8 is a schematic diagram of the structure of the power conversion module 13 disclosed herein. The power conversion module 13 includes a damping circuit 13a and a first capacitor 13b connected in series, and a controller (not shown in the figure). The damping circuit 13a and the first capacitor 13b are connected in series to further reduce the rated voltage of power semi-conductors in the power conversion module 13 during type selection. The damping circuit 13a includes a first inductor L_{d}, a first switch S_{du}, a second switch S_{db} and a second capacitor C_{d_dc}, and the first switch S_{du} and the second switch S_{db} are connected in series to form a first bridge arm; the first inductor L_{d} is connected between an intermediate node of the first bridge arm and the first capacitor 13b, and the second capacitor C_{d_dc} is connected in parallel to the first bridge arm; the power conversion module 13 further has an input port, and the input port includes a first input terminal P and a second input terminal N, with an input voltage V_{PN} between the first input terminal P and the second input terminal N. It can be understood that, as shown in Fig. 8, the first input terminal P and the second input terminal N are also the output terminals of the power module 13, that is, the input port and output port of the power conversion module 13 are the same port. As shown in Fig. 9, the controller includes a capacitor voltage control unit 131, a damping current generation unit 132 and an inductor current control unit 133. The capacitor voltage control unit 131 obtains a first current reference value ii according to the input voltage V_{PN} of the power conversion module 13, a voltage V_{Cd_d}c of the second capacitor C_{d_dc}, and a voltage reference value V_{Cd_dc_ref} of the second capacitor C_{d_dc}; the damping current generation unit 132 obtains a second current reference value i₂ according to the an input voltage V_{PN} of the power conversion module 13 and a current signal related to an input current of the power conversion module 13; the inductor current control unit 133 outputs a driving signal according to a current i_{Ld} flowing through the first inductor L_{d} and a current reference value i_{Ld_Ref} of the first inductor L_{d} to control the first switch S_{du} and the second switch S_{db}, wherein the current reference value i_{Ld_Ref} of the first inductor L_{d} is obtained according to the first current reference value ii and the second current reference value i₂. Upon the above control, the input voltage V_{PN} of the power conversion module 13 can be stabilized, in order to further reduce the power loss and cost of the power conversion module 13.

Fig. 9 is a schematic diagram of the control process of the controller disclosed herein, and the controller includes a capacitor voltage control unit 131, a damping current generation unit 132 and an inductor current control unit 133. Due to the first capacitor 13b blocking the DC voltage between the first input terminal P and the second input terminal N, the damping circuit 13a in the power conversion module 13 is controlled by the capacitor voltage control unit 131, damping current generation unit 132, and inductor current control unit 133 to dynamically simulate a resistor at a frequency other than DC. At this time, the damping current provided by the damping circuit 13a can be the AC current at the system interference frequency, instead of DC current, thereby further reducing the power loss and cost of the power conversion module 13. Refer to Fig. 9, in order to realize the damping circuit 13a to provide AC current at the system interference frequency, the specific structure and control process of the controller are as follows:

Due to the presence of the first capacitor 13b, the energy absorbed by the second capacitor C_{d_dc} cannot be sent back to the input port of the power conversion module 13 through the first capacitor 13b as direct current. Therefore, the capacitor voltage control unit 131 disclosed herein includes a first filter 131-1 and a phase-locked loop 131-2; the first filter 131-1 and the phase-locked loop 131-2 can track at least part of the AC harmonic components of the input voltage V_{PN} of the power conversion module 13, and obtain a first current reference value ii according to the at least part of the AC harmonic components, the voltage V_{Cd_dc} of the second capacitor C_{d_dc} and the voltage reference value V_{Cd_dc_ref} of the second capacitor C_{d_dc}. A second capacitor voltage (V_{Cd_dc}) of the damping circuit 13a can be controlled to exchange energy with the input port (i.e. DC bus) of the power conversion module 13 by using a phase-locked loop 131-2 to track at least part of the AC harmonic components of the input voltage V_{PN} of the power conversion module 13, and multiplying their unit waveforms to obtain a current reference value. Specifically, the capacitor voltage control unit 131 further includes a first subtracter 131-3, a first regulator 131-4 and a first multiplier 131-5, and the first subtractor 131-3 performs a subtraction operation on the voltage V_{Cd_dc} of the second capacitor C_{d_dc} and the voltage reference value V_{Cd_dc_ref} of the second capacitor C_{d_dc} to output a first error signal Vₑᵣᵣₒᵣ₁ which is regulated by the first regulator 131-4 and multiplied by a per-unit value V_{PN_6f0} of the at least part of AC harmonic components by the first multiplier 131-5 to obtain the first current reference value ii.

In this embodiment, the AC power source 11 can be a three-phase AC power source, as shown in Fig. 10A, and the rectification circuit 12 is a three-phase rectification circuit; the input port of the power conversion module 13 is connected to the output port of the three-phase rectification circuit 12, and the input port of the three-phase rectification circuit 12 is connected to the three-phase AC power source 11. Fig. 10B is the waveform of the output voltage of the three-phase rectification circuit. Fig. 10C shows the main AC harmonic components of the output voltage of the three-phase rectification circuit; When the power conversion module 13 is connected to the DC bus of the three-phase AC power source 11 after six-pulse rectification (i.e. three-phase rectification circuit), and the phase-locked loop 131-2 is used to track the main AC harmonic components on the DC bus voltage, including but not limited to the 6th harmonic component, 12th harmonic component, 18th harmonic component, etc., that is, at least part of AC harmonic components tracked by the phase-locked loop 131-2 include the 6th harmonic component, and/or the 12th harmonic component, and/or the 18th harmonic component of the output voltage of the three-phase rectification circuit, as shown in Figs. 11A-11C. The damping energy absorbed by the second capacitor C_{d_dc} can be sent back to the input port (i.e., DC bus) of the power conversion module 13 at the corresponding harmonic frequency by the capacitor voltage control unit 131 at the corresponding harmonic frequency to ensure the balance of the second capacitor C_{d_dc} of the power conversion module 13. In other words, the energy exchange between the second capacitor C_{d_dc} and the DC bus can be achieved by using the AC harmonics of the rectifier in AC/DC energy conversion. In this embodiment, the phase-locked loop 131-2 tracks the 6th harmonic component of the output voltage of the three-phase rectifier circuit to obtain V_{PN_6f0}.

In other embodiments, the AC power source 11 can be a single-phase AC power source, as shown in Fig. 11A, and the rectification circuit 12 is a single-phase rectification circuit, specifically, for example, a single-phase diode rectification circuit. The input port of the power conversion module 13 is connected to the output port of single-phase rectification circuit 12, and the input port of the single-phase rectification circuit 12 is connected to single-phase AC power source 11. Fig. 11B is the waveform of the output voltage of the single-phase rectifier rectification circuit, which has two pulses within one circuit cycle. Fig. 11C shows the main AC harmonic components of the output voltage in the single-phase rectification circuit. In this embodiment, at least part of the AC harmonic components tracked by the phase-locked loop 131-2 include the second harmonic component, and/or the 4th harmonic component, and/or the 6th harmonic component of the output voltage of the single-phase rectifier circuit.

Please continue to refer to Fig. 9, where the damping current generation unit 132 is used to generate the damping current required by the power conversion system 10 (i.e. the second current reference value i₂). The damping current generation unit 132 can generate damping current based on the equivalent impedance of the output port of the power conversion module 13 (such as the equivalent input impedance ZL of the constant power load as shown in Fig. 2) and the input voltage V_{PN} of the power conversion module 13. Specifically, low pass filtering can be performed on the current at the output port of the power conversion module 13 and the input voltage V_{PN} of the power conversion module 13. The cut-off frequency can be but not limited to 40Hz, and parameters reflecting the DC resistance (or DC conductance) of the backend circuit connected to the power conversion module 13 (such as the load conversion circuit as shown in Fig. 7) can be obtained. Then, the parameters reflecting the DC resistance (or DC conductance) required by the power conversion system 10 are scaled by the first coefficient K. To ensure that the power conversion module 13 generates sufficient damping, the first coefficient can be set but not limited to 0.5, and the simulation results when the first coefficient is equal to 0.5 are as shown in Fig. 13. Specifically, in this embodiment, the damping current generation unit 132 includes a second filter 132-1 and a second multiplier 132-2; the second filter 132-1 performs high pass filtering on the input voltage V_{PN} of the power conversion module 13 to obtain a first voltage value V_{PN_ripple}, and the second multiplier 132-2 performs a multiplication operation on the first voltage value V_{PN_ripple} and a first admittance parameter to obtain a second current reference value i₂. The damping current generation unit 132 also includes a third filter 132-3, a fourth filter 132-4, and a second divider 132-5. The third filter 132-3 performs low pass filtering on the input voltage V_{PN} of the power conversion module 13 to obtain a second voltage value V_{PN_dc}, and the fourth filter 132-4 performs low pass filtering on the current signal i_{Load} related to the input current of the power conversion module 13 to obtain a first current value i_{Load_dc}, where the second divider 132-5 performs a division operation on the first current value i_{Load_dc} and the second voltage V_{PN_dc} to obtain a second admittance parameter, and scales the second admittance parameter based on a first coefficient K to obtain the first admittance parameter.

In other embodiments, the damping current generation unit 132 includes a second filter 132-1 and a first divider 132-2'; the second filter 132-1 performs high pass filtering on the input voltage V_{PN} of the power conversion module 13 to obtain a first voltage value V_{PN ripple}, and the first divider 132-2' performs a division operation on the first voltage value V_{PN_ripple} and a first resistance parameter to obtain a second current reference value i₂. The damping current generation unit 132 includes a third filter 132-3, a fourth filter 132-4, and a second divider 132-5. The third filter 132-3 performs low pass filtering on the input voltage V_{PN} of the power conversion module 13 to obtain a second voltage value V_{PN_dc}, and the fourth filter 132-4 performs low pass filtering on the current signal i_{Load} related to the input current of the power conversion module 13 to obtain a first current value i_{Load_dc}; the second divider 132-5 performs a division operation on the second voltage value V_{PN_dc} and the first current value i_{Load_dc} to obtain a second resistance parameter, and scales the second resistance parameter based on the first coefficient K to obtain a first resistance parameter.

In the above embodiments, the cutoff frequency of the second filter 132-1 can be but not limited to 100Hz, and the cutoff frequencies of the third filter 132-3 and the fourth filter 132-4 can be but not limited to 40Hz; the first coefficient K is set to but not limited to 0.5.

The inductor current control unit 133 includes a second subtractor 133-1, a second regulator 133-2, and a first adder 133-3, and the second subtractor 133-1 performs a subtraction operation on the current i_{Ld} flowing through the first inductor L_{d} and the current reference value i_{Ld_Ref} of the first inductor to output a second error signal iₑᵣᵣₒᵣ₂, wherein the power conversion module further includes a second adder 134, where the current reference value i_{Ld_Ref} of the first inductor L_{d} is obtained by an addition operation on the first current reference value ii and the second current reference value i₂ through the second adder 134. The second error signal Vₑᵣᵣₒᵣ₂ is regulated by the second regulator 133-2 and added to a duty cycle feedforward value DFF by the first adder 133-3 to obtain a driving signal d_{d}. The driving signal d_{d} is output to the driving end of the first switch S_{du} and the second switch S_{db} in the damping circuit 13b of the power conversion module 13. The on/off of the first switch S_{du} and the second switch S_{db} is regulated to stabilize the input voltage of the power conversion module and further reduce the power loss and cost of the power conversion module.

According to Fig. 7, the power conversion system 10 also includes a load conversion circuit 14. The input port of the power conversion module 13 is connected in parallel to the output port of the rectification circuit 12 and the input port of the load conversion circuit 14. The input port and output port of the power conversion module 13 are the same port. The sum of the input current of the power conversion module 13 and the output current of the rectification circuit 12 is the input current of the load conversion circuit 14 (i.e. the output current of the power conversion module 13), where the load conversion circuit 14 is a DC-AC conversion circuit or a DC-DC conversion circuit.

The power conversion system 10 also includes an input inductor 15 and a bus capacitor 16, wherein the input inductor 15 is connected between the input ports of the AC power source 11 and the rectification circuit 12, and the bus capacitor 16 and the power conversion module 13 are sequentially connected in parallel to the output port of the rectification circuit 12. The rectification circuit 12, for example, is a three-phase rectification circuit as shown in Fig. 10A or a single-phase rectification circuit as shown in Fig. 11A, without limitations in the present disclosure.

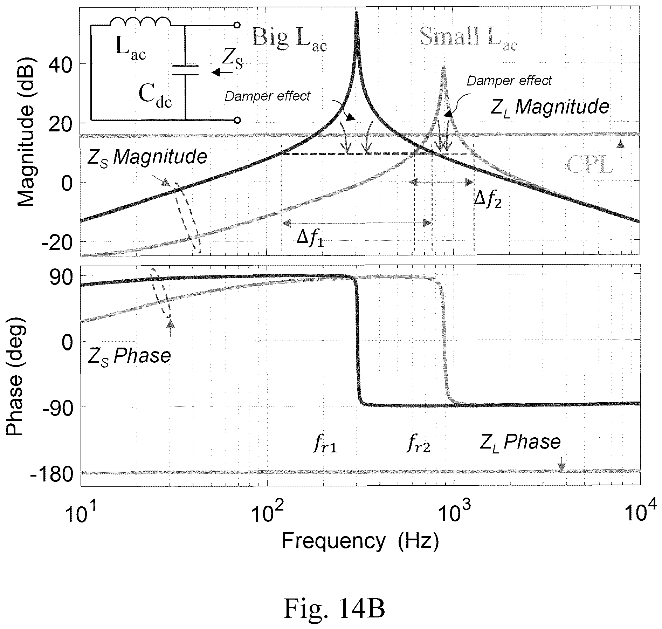

In some embodiments, the damping current can be optimized through regulating the first coefficient K in the damping current generation unit 132. Based on the impedance stability analysis, the frequency of the damping current required by the power conversion module 13 depends on the frequency range of the intersection between the source side equivalent impedance Z_{S}(S) (i.e. power conversion module side) and the load side equivalent Z_{L}(S) impedance (i.e. load conversion circuit side). As shown in Figs. 7 and 14A, due to the LC parallel resonance between the source side output impedance of the AC power source 11 and the rectification circuit 12, when the inductance of the input inductor 15 connected to the AC power source increases, the resonance frequency decreases, and the V_{PN} ripple frequency required by the damping current generation unit 132 decreases. Therefore, the frequency range for collecting V_{PN} is wider. According to Fig. 14B, the frequency range corresponding to the damping current should be within the frequency range where the resonance frequency amplitude of the source side impedance Z_{S}(S) is greater than the frequency amplitude of the load impedance Z_{L}(S). Therefore, when a constant first coefficient K is used, such as K=0.5, the damping current generation unit 132 will be injected with all frequency components higher than the cut-off frequency of the V_{PN} low pass filter, such as 100Hz in Fig. 9, which may provide more damping current than actually required. In order to adaptively adjust the frequency of the AC component of the damping current injected by the power conversion module 13 with different input inductors 15, the first coefficient K can be adaptively changed according to the desired frequency range to adjust the source side equivalent impedance Zs(S). Since the current signal related to the input current of the power conversion module 13 and the bus capacitor 16 can be pre-set, when the current signal related to the input current of the power conversion module 13 and the capacitance value of the bus capacitor 16 are known, the output impedance resonance frequency of the rectifier 12 can be obtained based on the average value of the input voltage V_{PN} (i.e. DC bus voltage) of the power conversion module 13, as shown in Fig. 15. When the inductance value L_{ac} of the input inductor 15 on the source side increases, the output voltage of the rectification circuit 12 (DC bus voltage in Fig. 15) decreases. Based on the DC bus voltage, the capacitance value of bus capacitor 16, and the current signal related to the input current of the power conversion module 13, the LC parallel resonance frequency (such as fr1 and fr2 in Fig. 14B and fr in Fig. 15) is obtained, thereby obtaining the required frequency component of the damping current, which is the corresponding frequency range of the V_{PN} to be collected. In this way, the damping current can be minimized, thereby improving the power of the power conversion module 13 and the efficiency of the whole power conversion system 10.

Therefore, in such embodiments, the damping current generation unit 132 obtains a second current reference value i₂ based on an input voltage V_{PN} of the power conversion module 13 and a current signal related to an input current of the power conversion module 13, including:
obtaining ripple components of the input voltage V_{PN} of the power conversion module 13, i.e., first voltage value V_{PN_ripple};
obtaining a resistance parameter based on the input voltage V_{PN} of the power conversion module 13 and the current signal related to the input current of the power conversion module 13;
obtaining the second current reference value i₂ based on a first coefficient K, the resistance parameter and the ripple component V_{PN_ripple} of the input voltage, wherein the first coefficient K is adaptively adjusted according to the input inductance 15.

The current signal related to the input current of the power conversion module 13 is, for example, the input current of the load conversion circuit 14 (i.e. the output current of the power conversion module 12) or the output current of the load conversion circuit 14. When the input inductance 15 increases, the resonant frequency of the LC parallel resonance between the output impedance of the rectification circuit 12 and the bus capacitor 16 decreases, and the required frequency of the required second current reference value i₂ decreases. Therefore, the first coefficient K can be adaptively adjusted according to the input inductance 15 to minimize the damping current, thereby improving the power of the power conversion module 13 and the efficiency of the whole power conversion system 10.

Fig. 12A is a simulation model for computer simulation in case that the constant power load (i.e. load conversion circuit) is powered by a three-phase rectifier. Fig. 12B shows the simulation results based on the simulation model in Fig. 12A, and Fig. 12C is an enlarged view of the simulation results in Fig. 12B. According to the simulation waveforms as shown in Figs 12B and 12C, it can be seen that the voltage V_{Cd_dc} of the second capacitor C_{d_dc} is in a balanced state.

Fig. 13 shows the simulation results of damping current generation in a damping current generation unit 132 based on different first coefficients K. To ensure sufficient damping in the second power conversion circuit, the first coefficient can be set to but not limited to 0.5. The simulation results when the first coefficient is equal to 0.5 are as shown in Fig.13.

Fig. 16 is a flowchart of the control method applied to the all aforementioned power conversion system 10, wherein the control method 100 of the power conversion system includes:
Step S101: providing a power conversion module which includes a damping circuit and a first capacitor connected in series and a controller, wherein the damping circuit includes a first inductor, a first switch, a second switch, and a second capacitor, and the first switch and the second switch are connected in series to form a first bridge arm; the first inductor is connected between an intermediate node of the first bridge arm and the first capacitor, and the second capacitor is connected in parallel to the first bridge arm;
Step S102: obtaining a first current reference value according to an input voltage of the power conversion module, a voltage of the second capacitor, and a voltage reference value of the second capacitor;
Step S103: obtaining a second current reference value according to an input voltage of the power conversion module and a current signal related to an input current of the power conversion module; and
Step S104: outputting a driving signal according to an inductor current flowing through the first inductor and an inductor current reference value of the first inductor to control the first switch and the second switch, in order to stabilize the input voltage of the power conversion module, wherein the current reference value of the first inductor is obtained according to the first current reference value and the second current reference value.

In some embodiments, the current reference value of the first inductor is obtained according to performing an addition operation on the first current reference value and the second current reference value.

In some embodiments, the step S102 specifically includes: obtaining at least part of AC harmonic components of the input voltage of the power conversion module, and obtaining the first current reference value based on the at least part of the AC harmonic components, the voltage of the second capacitor, and the voltage reference value of the second capacitor; specifically, performing a subtraction operation on the voltage of the second capacitor and the voltage reference value of the second capacitor to output a first error signal which is regulated and multiplied by a per-unit value of the at least part of AC harmonic components to obtain the first current reference value.

In some embodiments, the power conversion module further includes a three-phase rectification circuit, and an input port of the power conversion module is connected to an output port of the three-phase rectification circuit; an input port of the three-phase rectification circuit is connected to a three-phase AC power source, and the at least part of AC harmonic components include a 6th harmonic component, and/or 12th harmonic component, and/or 18th harmonic component of the output voltage of the three-phase rectification circuit.

In other embodiments, the power conversion module further includes a single-phase rectification circuit, and an input port of the single-phase rectification circuit is connected to a single-phase AC power source; an input port of the power conversion module is connected to an output port of the single-phase rectification circuit, and the at least part of AC harmonic components include a second harmonic component, and/or 4th harmonic component, and/or 6th harmonic component of the output voltage of the three-phase rectification circuit.

In some embodiments, the step S103 specifically includes: obtaining a first voltage value according to performing high pass filtering on an input voltage of the power conversion module; performing a multiplication operation on the first voltage value and a first admittance parameter to obtain the second current reference value; or includes: obtaining a first voltage value according to performing high pass filtering on an input voltage of the power conversion module; performing a division operation on the first voltage value and a first resistance parameter to obtain the second current reference value.

Furthermore, the step S103 further includes: obtaining a second voltage value according to performing low pass filtering on an input voltage of the power conversion module; performing low pass filtering on the current signal related to the input current of the power conversion module to obtain a first current value; further includes: performing a division operation on the second voltage value and the first current value to obtain a second resistance parameter; scaling the second resistance parameter based on a first coefficient to obtain the first resistance parameter; or further includes: performing a division operation on the first current value and the second voltage value to obtain a second admittance parameter; scaling the second admittance parameter based on a first coefficient to obtain the first admittance parameter;

The cutoff frequency of the high pass filtering can be but not limited to 100Hz, and the cutoff frequencies of the low pass filtering can be but not limited to 40Hz; the first coefficient can be set to but not limited to 0.5.

In some embodiments, the step S104 specifically includes: performing a subtraction operation on the current flowing through the first inductor and the current reference value of the first inductor to output a second error signal; the second error signal is regulated and added to a duty cycle feedforward value to obtain the driving signal.

In some embodiments, the power conversion system further includes a rectification circuit and a load conversion circuit, and the input port of the power conversion module is connected in parallel to the output port of the rectification circuit and the input port of the load conversion circuit; the sum of the input current of the power conversion module and the output current of the rectification circuit is the input current of the load conversion circuit, and the load conversion circuit is a DC-AC conversion circuit or a DC-DC conversion circuit. The damping circuit is equivalent to a resistor after being regulated by the controller.

In some embodiments, the power conversion system further includes an AC power source, an input inductor, a rectification circuit, and a bus capacitor, and the input inductor is electrically connected between the AC power source and the input end of the rectification circuit; the bus capacitor and the power conversion module are sequentially connected in parallel to the output port of the rectification circuit, and the step S103 further includes:
obtaining a ripple component of the input voltage of the power conversion module;
obtaining a first resistance parameter based on the input voltage of the power conversion module and the current signal related to the input current of the power conversion module;
obtaining the second current reference value based on a first coefficient, the resistance parameter and the ripple component of the input voltage, wherein the first coefficient is adaptively adjusted according to the input inductance, in order to minimize the damping current, thereby improving the power of the power conversion module and the efficiency of the whole power conversion system.

As the input inductance increases, the resonant frequency of the LC parallel resonance between the output impedance of the rectification circuit and the bus capacitor decreases, the required frequency of the second current reference value decreases, and the first coefficient is adaptively adjusted according to the input inductance.

The power conversion system further includes a load conversion circuit, wherein the input port of the power conversion module is connected in parallel to the input port of the load conversion circuit, and the current signal related to the input current of the power conversion module includes the input current of the load conversion circuit or the output current of the load conversion circuit.

To sum up, the embodiments of the present disclosure provide a power conversion system and a control method thereof. Compared with the existing technical solution, the power conversion system has higher work efficiency, stronger system stability and lower loss.

Although the embodiments of the present disclosure have been shown and described, an ordinary person skilled in the art can understand that: without departing from the principles and the spirit of the present disclosure, various changes, amendments, replacements and deformations may be made to these embodiments, and the scope of protection disclosed herein shall be subject to the scope specified in the attached claims.

## Claims

1. A power conversion system (10), comprising a power conversion module (13), wherein the power conversion module (13) comprises ,a damping circuit (13a) and a first capacitor (13b) connected in series, and a controller, wherein the damping circuit (13a) comprises a first inductor (L_{d}), a first switch (S_{du}), a second switch (S_{db}), and a second capacitor (C_{d_dc}), and the first switch (S_{du}) and the second switch (S_{db}) are connected in series to form a first bridge arm; the first inductor (L_{d}) is connected between an intermediate node of the first bridge arm and the first capacitor (13b), and the second capacitor (C_{d_dc}) is connected in parallel to the first bridge arm, **characterized in that**, the controller comprises:
a capacitor voltage control unit (131), obtaining a first current reference value (ii) according to an input voltage (V_{PN}) of the power conversion module (13), a voltage (V_{Cd_dc}) of the second capacitor, and a voltage reference value (V_{Cd_dc_ref}) of the second capacitor;
a damping current generation unit (132), obtaining a second current reference value (i₂) according to the input voltage (V_{PN}) of the power conversion module (13) and a current signal related to an input current of the power conversion module (13); and
an inductor current control unit (133), outputting a driving signal (d_{d}) according to a current (i_{Ld}) flowing through the first inductor (L_{d}) and a current reference value (i_{Ld_Ref}) of the first inductor (L_{d}) to control the first switch (S_{du}) and the second switch (S_{db}), in order to stabilize the input voltage (V_{PN}) of the power conversion module (13), wherein the current reference value (i_{Ld_Ref}) of the first inductor (L_{d}) is obtained according to the first current reference value (ii) and the second current reference value (i₂).

2. The power conversion system (10) according to claim 1, wherein the capacitor voltage control unit (131) comprises a first filter (131-1) and a phase-locked loop (131-2), and the first filter (131-1) and the phase-locked loop (131-2) are used to track at least part of AC harmonic components of the input voltage (V_{PN}) of the power conversion module (13), and obtaining the first current reference value (ii) according to the at least part of the AC harmonic components, the voltage (V_{Cd_dc}) of the second capacitor (C_{d_dc}) and the voltage reference value (V_{Cd_dc_ref}) of the second capacitor (C_{d_dc}).

3. The power conversion system (10) according to claim 2, wherein the capacitor voltage control unit (131) further comprises a first subtracter (131-3), a first regulator (131-4), and a first multiplier (131-5), and the first subtractor (131-3) performs a subtraction operation on the voltage (V_{Cd_dc}) of the second capacitor (C_{d_dc}) and the voltage reference value (V_{Cd_dc_ref}) of the second capacitor (C_{d_dc}) to output a first error signal (Vₑᵣᵣₒᵣ₁) which is regulated by the first regulator (131-4) and multiplied by a per-unit value (V_{PN_6f0}) of the at least part of AC harmonic components by the first multiplier (131-5) to obtain the first current reference value (ii).

4. The power conversion system (10) according to claim 2, wherein the power conversion system (10) further comprises a three-phase rectification circuit (12), and an input port of the power conversion module (13) is connected to an output port of the three-phase rectification circuit (12); an input port of the three-phase rectification circuit (12) is connected to a three-phase AC power source (11), and the at least part of AC harmonic components tracked by the phase-locked loop (131-2) comprise a 6th harmonic component, and/or 12th harmonic component, and/or 18th harmonic component of the output voltage of the three-phase rectification circuit (12).

5. The power conversion system (10) according to claim 2, wherein the power conversion system (10) further comprises a single-phase rectification circuit (12), and an input port of the single-phase rectification circuit (12) is connected to a single-phase AC power source (11); an input port of the power conversion module (13) is connected to an output port of the single-phase rectification circuit (12), and the at least part of AC harmonic components tracked by the phase-locked loop (131-2) comprise a second harmonic component, and/or 4th harmonic component, and/or 6th harmonic component of the output voltage of the single-phase rectification circuit (12).

6. The power conversion system according to claim 1, wherein:
the damping current generation unit (132) comprises a second filter (132-1) and a second multiplier (132-2); the second filter (132-1) performs high pass filtering on the input voltage (V_{PN}) of the power conversion module (13) to obtain a first voltage value (V_{PN_ripple}), and the second multiplier (132-2) performs a multiplication operation on the first voltage value (V_{PN_ripple}) and a first admittance parameter to obtain the second current reference value (i₂); or
the damping current generation unit (132) comprises a second filter (132-1) and a first divider (132-2'); the second filter (132-1) performs high pass filtering on the input voltage (V_{PN}) of the power conversion module (13) to obtain a first voltage value (V_{PN_ripple}), and the first divider (132-2') performs a division operation on the first voltage value (V_{PN_ripple}) and a first resistance parameter to obtain the second current reference value (i₂).

7. The power conversion system (10) according to claim 6, wherein the damping current generation unit (132) further comprises a third filter (132-3), a fourth filter (132-4) and a second divider (132-5); the third filter (132-3) performs low pass filtering on the input voltage (V_{PN}) of the power conversion module (13) to obtain a second voltage value (V_{PN_dc}), and the fourth filter (132-4) performs low pass filtering on a current signal related to the input current of the power conversion module (13) to obtain a first current value (i_{Load_dc});
the second divider (132-5) performs a division operation on the first current value (i_{Load_dc}) and the second voltage value (V_{PN_dc}) to obtain a second admittance parameter, and scales the second admittance parameter based on a first coefficient (K) to obtain the first admittance parameter; or
the second divider (132-5) performs a division operation on the second voltage value (V_{PN_dc}) and the first current value (i_{Load_dc}) to obtain a second resistance parameter, and scales the second resistance parameter based on the first coefficient (K) to obtain the first resistance parameter.
wherein the cutoff frequency of the second filter (132-1) is 100Hz, and the cutoff frequencies of the third filter (132-3) and the fourth filter (132-4) are 40Hz; the first coefficient (K) is 0.5.

8. The power conversion system (10) according to claim 1, wherein the inductor current control unit (133) comprises a second subtractor (133-1), a second regulator (133-2), and a first adder (133-3); the second subtractor (133-1) performs a subtraction operation on the current flowing (i_{Ld}) through the first inductor (L_{d}) and the current reference value (i_{Ld_Ref}) of the first inductor (L_{d}) to output a second error signal (iₑᵣᵣₒᵣ₂), and the second error signal (iₑᵣᵣₒᵣ₂) is regulated by the second regulator (133-2) and added to a duty cycle feedforward value (DFF) by the first adder (133-3) to obtain the driving signal (d_{d}).

9. The power conversion system (10) according to claim 1, wherein the power conversion module (13) further comprises a second adder (134), and the current reference value (i_{Ld_Ref}) of the first inductor (i_{Ld}) is obtained by adding the first current reference value (ii) and the second current reference value (i₂) through the second adder (134).

10. The power conversion system (10) according to claim 1, wherein the power conversion system (10) further comprises a rectification circuit (12) and a load conversion circuit (14), and the input port of the power conversion module (13) is connected in parallel to the output port of the rectification circuit (12) and the input port of the load conversion circuit (14); the sum of the input current of the power conversion module (13) and the output current of the rectification circuit (12) is the input current of the load conversion circuit (14), and the load conversion circuit (14) is a DC-AC conversion circuit or a DC-DC conversion circuit.

11. The power conversion system (10) according to claim 1, wherein the damping circuit (13a) is equivalent to a resistor after being regulated by the capacitor voltage control unit (131), the damping current generation unit (132), and the inductor current control unit (133).

12. The power conversion system (10) according to claim 1, wherein the power conversion system (10) further comprises an AC power source (11), an input inductor (15), a rectification circuit (12), and a bus capacitor (16), and the input inductor (15) is connected between the AC power source (11) and the input port of the rectification circuit (12); the bus capacitor (16) and the power conversion module (13) are sequentially connected in parallel to the output port of the rectification circuit (12), and the step of obtaining a second current reference value (i₂) according to the input voltage (V_{PN}) of the power conversion module (13) and the current signal related to the input current of the power conversion module (13) comprises:
obtaining a ripple component of the input voltage (V_{PN}) of the power conversion module (13);
obtaining a resistance parameter based on the input voltage (V_{PN}) of the power conversion module (13) and the current signal related to the input current of the power conversion module (13);
obtaining the second current reference value (i₂) based on a first coefficient (K), the resistance parameter and the ripple component (V_{PN_ripple}) of the input voltage (V_{PN}), wherein the first coefficient (K) is adaptively adjusted according to the input inductance (15).

13. The power conversion system (10) according to any of claims 1, 6 and 12, further comprising a load conversion circuit (14), wherein the input port of the power conversion module (13) is connected in parallel to the input port of the load conversion circuit (14), and the current signal related to the input current of the power conversion module (13) is the input current of the load conversion circuit (14) or the output current of the load conversion circuit (14).

14. The power conversion system (10) according to claim 12, wherein as the input inductance (15) increases, the resonant frequency of the LC parallel resonance between the output impedance of the rectification circuit (12) and the bus capacitor (16) decreases, the required frequency of the second current reference value (i₂) decreases, and the first coefficient (K) is adaptively adjusted according to the input inductance (15).

15. A control method of a power conversion system, **characterized in that**, the control method comprises:
providing a power conversion module (13) which comprises a damping circuit (13a) and a first capacitor (13b) connected in series, and a controller, wherein the damping circuit (13a) comprises a first inductor (L_{d}), a first switch (S_{du}), a second switch (S_{db}), and a second capacitor (C_{d_dc}), and the first switch (S_{du}) and the second switch (S_{db}) are connected in series to form a first bridge arm; the first inductor (L_{d}) is connected between an intermediate node of the first bridge arm and the first capacitor (13b), and the second capacitor (C_{d_dc}) is connected in parallel to the first bridge arm;
obtaining a first current reference value (ii) according to an input voltage (V_{PN}) of the power conversion module (13), a voltage (V_{Cd_dc}) of the second capacitor (C_{d_dc}), and a voltage reference value (V_{Cd_dc_ref}) of the second capacitor (C_{d_dc});
obtaining a second current reference value (i₂) according to the input voltage (V_{PN}) of the power conversion module (13) and a current signal related to an input current of the power conversion module (13); and
outputting a driving signal (d_{d}) according to an inductor current (i_{Ld}) flowing through the first inductor (L_{d}) and an inductor current reference value (i_{Ld_Ref}) of the first inductor (L_{d}) to control the first switch (S_{du}) and the second switch (S_{db}), in order to stabilize the input voltage (V_{PN}) of the power conversion module (13), wherein the current reference value (i_{Ld_Ref}) of the first inductor (L_{d}) is obtained according to the first current reference value (ii) and the second current reference value (i₂) .
